# EUROPEAN PATENT APPLICATION

(11) **EP 4 576 350 A1**
(43) Date of publication of application: **25.06.2025**
(21) Application number: 24220953.4
(22) Date of filing: 18.12.2024
(51) Int. Cl.: H01M 50/152, H01M 50/166, H01M 50/171, H01M 50/186, H01M 50/342, B05D 7/00

(54) **SEALING MEMBER AND BATTERY CAP**

(30) Priority: 18.12.2023 CN 202323465505 U; 26.07.2024 WO PCT/CN2024/107779
(71) Applicant: Eve Energy Co., Ltd., Huizhou, Guangdong 516006 (CN)
(72) Inventor: LI, Jidong, Huizhou, Guangdong 516006 (CN); FU, Zhibo, Huizhou, Guangdong 516006 (CN); WANG, Xingjian, Huizhou, Guangdong 516006 (CN); SONG, Pengyuan, Huizhou, Guangdong 516006 (CN)
(74) Representative: Berggren Oy

(57) **Abstract**

A sealing member (100) and a battery cap (9) are provided. The sealing member (100) includes a body (1) and a colloid structure (5). The body (1) is configured in a shape of a hollow ring and includes a first ring body (11) and a second ring body (12) connected in an axial direction of the body (1). The first ring body (11) and the second ring body (12) are both configured in a shape of a hollow ring. An inner diameter of the first ring body (11) is larger than that of the second ring body (12). The second ring body (12) includes a first surface (2) and a second surface (3) that are arranged opposite to each other in the axial direction of the second ring body (12). The colloid structure (5) includes a first colloid (51) applied on a surface of the body (1) and a second colloid (52) applied at positions where the first colloid (51) is located on the first surface (2) and/or the second surface (3).

## Description

### TECHNICAL FIELD

The present application relates to the technical field of batteries, and in particular, to a sealing member and a battery cap.

### BACKGROUND

In the prior art, a sealing ring of a cap on a battery is needed to be coated with multiple types of glues on its surface to improve the ability of sealing a gap between a battery case and the cap during battery packing. The related coating process includes applying one type of glue to a local area of the seal ring, and then applying another type of glue to an entire surface of the seal ring. Therefore, there are multiple layers of different type of glue in some areas of the seal ring.

However, in the process of applying another type of glue on the entire surface of the sealing ring, a roller device is needed to be used for spin coating. During this process, the glue previously applied to the local area of the sealing ring is subjected to an uneven surface and a poor appearance due to collision and friction with the roller device, which leads to a poor sealing with the two different types of glue laminated and coated.

### SUMMARY

According to a first aspect, the present application provides a sealing member, including:
a body, configured in a shape of a hollow ring, wherein the body includes a first ring body and a second ring body connected in an axial direction of the body, the first ring body and the second ring body are both configured in a shape of a hollow ring, and an inner diameter of the first ring body is greater than an inner diameter of the second ring body, the second ring body includes a first surface and a second surface, the first surface and the second surface are arranged opposite to each other in an axial direction of the second ring body; and
a colloid structure, including a first colloid and a second colloid, wherein the first colloid is applied on a surface of the body, and a second colloid is applied at positions where the first colloid is located on any one or a combination of two of the first surface and the second surface.

According to a second aspect, the present application provides a battery cap, including a sealing member.

According to embodiments of the present application, the first colloid is coated on the body, and then the second colloid is coated on a portion that needs to be coated with the second colloid of the second ring body. That is, the coating of the second colloid is subsequent to the coating of the first colloid. In case that the first colloid is coated on the surface of the body by the roller device, the second colloid is not yet coated on the second ring body, so that the uneven surface of the second colloid caused by the interference between the second colloid and the roller device can be avoided, thereby the sealing performance of the sealing member is improved.

### BRIEF DESCRIPTION OF THE DRAWINGS

FIG. 1 is a schematic cross-sectional view of a sealing member according to the present application;
FIG. 2 is an enlarged schematic view of a structure of part A in FIG. 1;
FIG. 3 is an enlarged schematic view of a structure of part B in FIG. 1;
FIG. 4 is an enlarged schematic view of a structure of part B in FIG. 1;
FIG. 5 is a schematic perspective view of a body according to the present application;
FIG. 6 is a schematic cross-sectional view of a cap assembly according to the present application.

Reference numerals in the drawings:
100, sealing member; 1, body; 11, first ring body; 12, second ring body; 2, first surface; 3, second surface; 5, colloid structure; 51, first colloid; 52, second colloid; 1A, third surface; 21, first sub-surface; 6, protrusion; 22, second sub-surface; 23, third sub-surface; 7, fourth surface; 8, fifth surface; 31, fourth sub-surface; 32, fifth sub-surface; 33, sixth sub-surface; 9, cap; 10, rupture disk; 11A, first chamber; 12A, second chamber.

### DETAILED DESCRIPTION

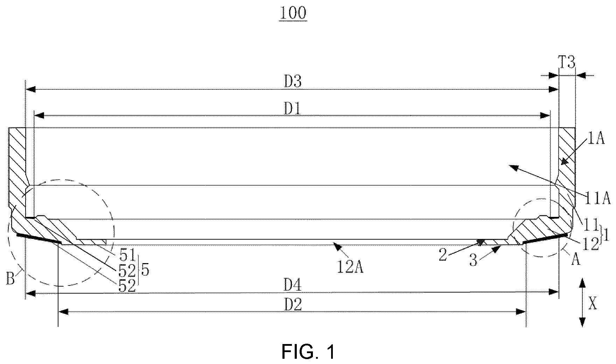

The present application provides a sealing member 100. An embodiment of the present application is shown in FIG. 1 to FIG. 6. It should be noted that in the following, an axial direction of a body 1, a first ring body 11, and the second ring body 12 is referred to as an X direction in FIG. 1, and a radial direction of the body 1, the first ring body 11, and the second ring body 12 is referred to as the direction of any straight line in a plane perpendicular to the X direction in FIG. 1.

Referring to FIG. 1 to FIG. 6, the sealing member 100 includes a body 1 and a colloid structure 5. The body 1 is configured in a shape of a hollow ring. The body 1 includes a first ring body 11 and a second ring body 12 connected in an axial direction of the body 1. The first ring body 11 and the second ring body 12 are both configured in a shape of a hollow ring, and an inner diameter of the first ring body 11 is larger than an inner diameter of the second ring body 12. The second ring body 12 includes a first surface 2 and a second surface 3. The first surface 2 and the second surface 3 are arranged opposite to each other in an axial direction of the second ring body 12. The colloid structure 5 includes a first colloid 51 applied on the surface of the body 1 and a second colloid 52 applied at positions where the first colloid 51 is located on any one or a combination of two of the first surface 2 and the second surface 3.

According to the embodiments of the present application, the first colloid 51 is coated on the body 1, and then the second colloid 52 is coated on a portion of the second ring body 12 where the second colloid 52 is needed to be coated. That is to say, the coating of the second colloid 52 is subsequent to the coating of the first colloid 51. In case that the first colloid 51 is coated on the surface of the body 1 by a roller device, the second colloid 52 is not yet coated on the second ring body 12. Therefore, the uneven surface of the second colloid 52 caused by the interference between the second colloid 52 and the roller device can be avoided, thereby improving the sealing performance of the sealing member 100.

In an embodiment of the present application, the second colloid 52 may be coated on the first surface 2. In another embodiment of the present application, the second colloid 52 may be coated on the second surface 3. In yet another embodiment of the present application, the second colloid 52 may be coated on both the first surface 2 and the second surface 3.

In an embodiment of the present application, the second colloid 52 is coated on the first colloid 51 on the first surface 2 and the second surface 3, so that the sealing between a rupture disk 10 and the body 1 as well as the sealing between the battery case and the body 1 can be improved.

In some embodiments of the present application, the second colloid 52 located on the first surface 2 and the second colloid 52 located on the second surface 3 may be of the same or different materials. In an embodiment of the present application, the second colloid 52 located on the first surface 2 and the second colloid 52 located on the second surface 3 are of different materials. The second colloid 52 located on the first surface 2 and the second colloid 52 located on the second surface 3 are both of n-alkanes. The model of the second colloid 52 located on the first surface 2 is HLI-T11 and M-13Z. The model of the second colloid 52 located on the second surface 3 is HWT-09D, or HWT-20D. Indeed, the model of the second colloid 52 is not limited thereto, and any model of glue applied in the prior art to improve the sealing performance of the battery structure can be applied to the embodiments of the present application.

It should be noted that in an embodiment of the present application, the first colloid 51 is an asphaltic glue which is a colloid of n-alkanes. The model of the asphaltic glue may be, for example, M-13 SO-A, or HLI-015MB.

The first colloid 51 (i.e., asphaltic glue) is spin coated on the entire outer surface of the body 1 by the roller device, thereby improving the sealing performance of the sealing member 100 applied to the battery structure. The second colloid 52 is partially applied and coated on the first colloid 51, so that the sealing performance between the sealing member 100 and parts in the battery structure, such as the battery case and the rupture disk 10 can be further improved.

Further, the inner diameter of the first ring body 11 is larger than the inner diameter of the second ring body 12, the first surface 2 or the second surface 3 of the second ring body 12 can be enclosed with the first ring body to form an angled surface, and can be further used for mounting parts such as the rupture disk 10 and a cap 9.

Referring to FIG. 1 to FIG. 3, in an embodiment of the present application, a first chamber 11A is formed in the first ring body 11, and the first ring body 11 includes a third surface 1A. The third surface 1A is an inner wall of the first chamber 11A. The first surface 2 includes a first sub-surface 21 configured to be a ring. The first sub-surface 21 is connected to the third surface 1A. The second colloid 52 is applied on the first sub-surface 21. The first sub-surface 21 is configured to be a ring and is connected to the third surface 1A so as to form a mounting platform for limiting the positions of components such as the rupture disk 10 mounted thereon. The rupture disk 10 is in direct contact with the third surface 1A in the axial direction of the body 1. Therefore, the second colloid 52 is applied on the first sub-surface 21, so that both the first colloid 51 and the second colloid 52 are applied between the rupture disk 10 and the body 1, thereby further improving the sealing performance between the rupture disk 10 and the body 1.

In some embodiments of the present application, the second colloid 52 applied on the first sub-surface 21 is configured to be a ring. The inner diameter of the second colloid 52 applied on the first sub-surface 21 is D1 and the inner diameter of the first sub-surface 21 is D2. Where D1 and D2 satisfy: D1 ≥ D2. With such an arrangement, it ensures that the second colloid 52 is applied on the first sub-surface 21 without overflow of the second colloid 52. The outer diameter of the second colloid 52 located on the first sub-surface 21 is D3, and the outer diameter of the first sub-surface 21 is D4. Where D3 and D4 satisfy: D3 ≤ D4. That is, the second colloid 52 coated on the first sub-surface 21 can be blocked by the third surface 1A in the axial direction of the body 1, that is, it can be ensured that D3 and D4 satisfy the relationship of D3 ≤ D4.

In some embodiments of the present application, D2 also satisfies: D2 ≥ 14.4 mm. On the basis of D1 ≥ D2 in the present application, D1 is set to be greater than or equal to 14.4 mm. That is, D1 is equal to or greater than 14.4 mm, so that the overflow of the second colloid 52 coated on the first sub-surface 21 is avoided. Note that the inner diameter D2 and the outer diameter D4 of the first sub-surface 21 vary depending on the size of the sealing member 100. In an embodiment of the present application, the sealing member 100 is applied to a 21700-model cylindrical battery, and D2 is equal to 16.8 mm and D4 is equal to 19.15 mm, that is, D1 ≥ 16.8 mm and D3 ≤ 19.15 mm, which ensures that the overflow of the second colloid 52 coated on the first sub-surface 21 is avoided. In another embodiment of the present application, the sealing member 100 is applied to a 18650-model cylindrical battery, and D2 is equal to 14.40 mm and D4 is equal to 16.45 mm, that is, D1 ≥ 14.40 mm and D3 ≤ 16.45 mm, which ensures that the overflow of the second colloid 52 coated on the first sub-surface 21 is avoided.

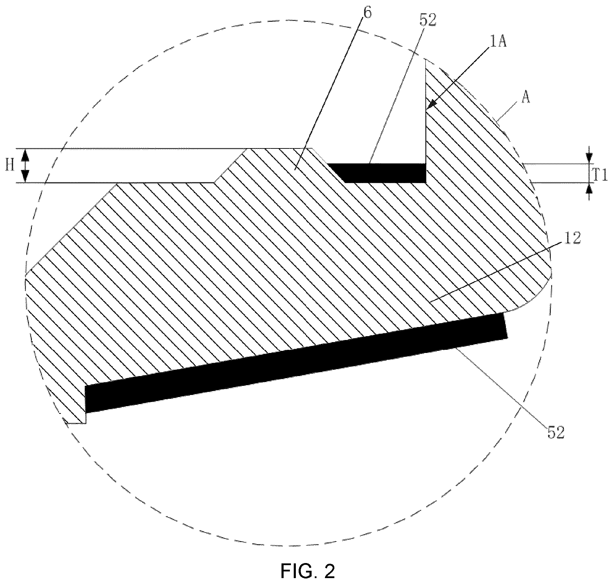

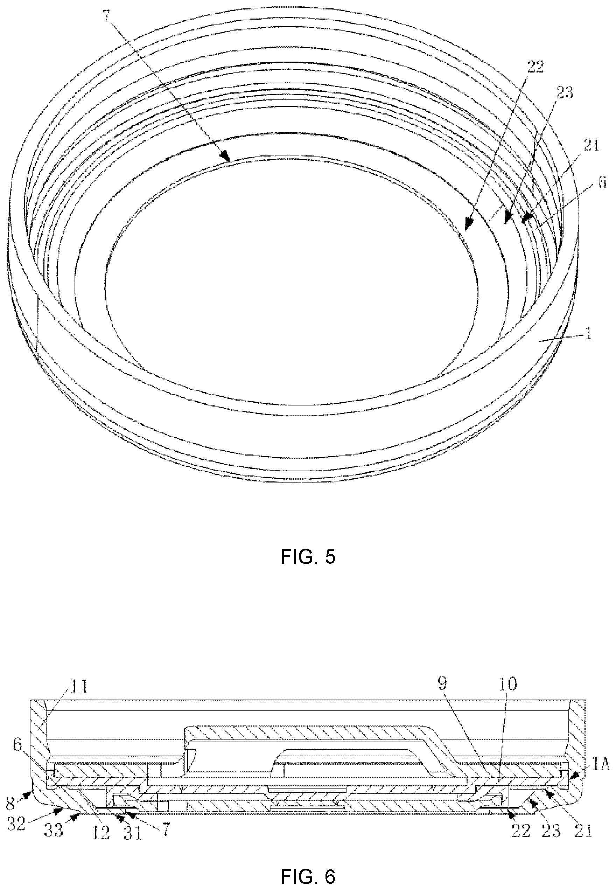

Referring to FIG. 2 to FIG. 4, a protrusion 6 configured in a shape of a ring is further arranged on the first sub-surface 21. The height of the protrusion 6 in the axial direction of the second ring body 12 is greater than the thickness of the second colloid 52 in the axial direction of the second ring body 12. Referring further to FIG. 6, with such an arrangement, when the rupture disk 10 is fitted into the body 1 of the sealing member 100, at least part of the protrusion 6 is in contact with the rupture disk 10. In this case, without external forces, the protrusion 6 is just in contact with the rupture disk 10 and the seal between the protrusion 6 and the rupture disk 10 is poor. When the body 1 is fitted into the battery case and the battery is formed, the body 1 is pressed by the battery case in the axial direction of the body 1, so that the seal of the gap between the protrusion 6 and the rupture disk 10 is improved, and besides the protrusion 6, the gap between the rupture disk 10 and the body 1 is further sealed by the second colloid 52. That is, both the protrusion 6 and the second colloid 52 are arranged on the purpose of sealing the gap between the first sub-surface 21 and the rupture disk 10. First, the protrusion 6 is in contact with the rupture disk 10 and is deformed to an extent, so that the seal between the protrusion 6 and the rupture disk 10 is improved. Further, the second colloid 52 comes into contact with the rupture disk 10 and adheres the rupture disk 10 to the first sub-surface 21, so that a good sealing effect is achieved. It will be appreciated that the protrusion 6 is pressed by the rupture disk 10, so that the height of the protrusion 6 in the axial direction of the second ring body 12 is reduced, the second colloid 52 having a thickness less than the height of the protrusion 6 may contact the rupture disk 10 only after the protrusion 6 is deformed. Therefore, the contact between the rupture disk 10 and the second colloid 52 is avoided at the beginning of the deformation of the protrusion 6, and the overflow of the pressed second colloid 52 can be avoided.

In some embodiments of the present application, the second colloid 52 is located between the protrusion 6 and the third surface 1A in the radial direction of the second ring body 12. That is, the movement of the second colloid 52 is limited by the protrusion 6 and the third surface 1A in the radial direction of the second ring body 12. Moreover, the height of the protrusion 6 in the axial direction of the second ring body 12 is greater than the thickness of the second colloid 52 in the axial direction of the second ring body 12. Therefore, the overflow of the second colloid 52 from the first sub-surface 21 can be avoided.

The height of the protrusion 6 in the axial direction of the second ring body 12 is H, and H satisfies 0.10 mm ≤ H ≤ 0.16 mm. The height of the protrusion 6 is set in the range of 0.10 mm ≤ H ≤ 0.16 mm so as to facilitate the assembly of parts in the chamber of the body 1. The protrusion 6 is also used for raising the rupture disk 10 to an extent. In case that the height of the protrusion 6 is less than 0.10 mm, there may be interference between the rupture disk 10 and a current interrupt device (CID). In case that the height of the protrusion 6 is larger than 0.16 mm, the assembly of components such as the rupture disk 10 and the cap 9 located in the body 1 is affected.

The thickness of the second colloid 52 applied on the first sub-surface 21 in the axial direction of the second ring body 12 is T1, and T1 satisfies: 0 < T1 < 0.10 mm. The thickness T1 of the second colloid 52 is set to be 0 < T1 < 0.10 mm, so that the second colloid 52 is coated by a gluing equipment in once, thereby the step of processing the sealing member 100 is eliminated. In case that the thickness T1 of the second colloid 52 is equal to or greater than 0.10 mm, which is the minimum height of the height H of the protrusion 6, the risk of the overflow of second colloid 52 is easily occurred when the protrusion 6 is deformed.

Further, the weight of the second colloid 52 applied on the first sub-surface 21 is M. M satisfies: 5 mg ≤ M ≤ 9 mg. That is, based on the thickness of the second colloid 52 in the axial direction of the second ring body 12 and the application area of the second colloid 52 on the first sub-surface 21, the weight of the second colloid 52 is between 5 mg and 9 mg.

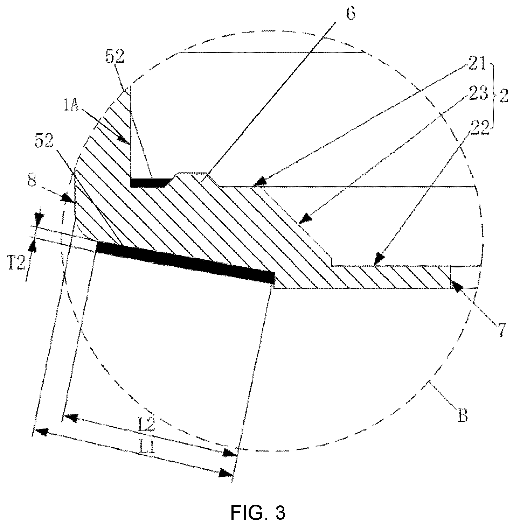

Referring to FIG. 3, the first surface 2 further includes a second sub-surface 22 and a third sub-surface 23. The second sub-surface 22 is configured to be a ring and has an outer diameter less than the inner diameter of the first sub-surface 21. The second sub-surface 22 is located on a side, away from the first ring body 11 in the axial direction of the second ring body 12, of the first sub-surface 21. The first sub-surface 21 is connected to the second sub-surface 22 by the third sub-surface 23. With such an arrangement, the situation that the current interrupt device (CID) located inside the body 1 is pressed by the sealing member 100 during the process of assembly and thereby affecting the performance of the current interrupt device is avoided.

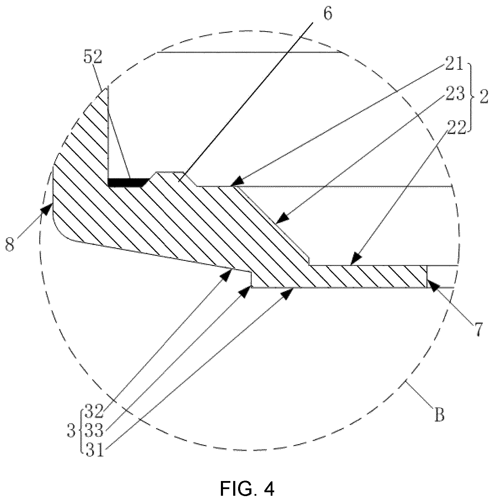

Referring to FIG. 1 and FIG. 4, in some embodiments of the present application, a second chamber 12A is formed in the second ring body 12. The second ring body 12 further includes a fourth surface 7 and a fifth surface 8. The fourth surface 7 is an inner wall of the second chamber 12A, and the fifth surface 8 is disposed opposite to the fourth surface 7 in the axial direction of the second ring body 12. The second surface 3 includes a fourth sub-surface 31 configured to be a ring and a fifth sub-surface 32 connecting the fourth sub-surface 31 and the fifth surface 8. The fourth sub-surface 31 is connected to the fourth surface 7. The fifth sub-surface 32 is arranged obliquely in the axial direction of the second ring body 12, and the second colloid 52 is applied on the fifth sub-surface 32. That is, in this embodiment, the fifth sub-surface 32 is in direct contact with the battery case. The first colloid 51 is coated on the second surface 3 and the second colloid 52 is coated on the fifth sub-surface 32, so that the sealing performance between the body 1 and the battery case is improved.

Referring to FIG. 3 and FIG. 4, in some embodiments of the present application, the distance from a connection between the fifth sub-surface 32 and the fourth sub-surface 31 to a connection between the fifth sub-surface 32 and the fifth surface 8 is L1. The length of the second colloid 52 applied on the fifth sub-surface 32 in the direction from the connection between the fifth sub-surface 32 and the fourth sub-surface 31 to the connection between the fifth sub-surface 32 and the fifth surface 8 is L2, where L1 and L2 satisfy: 0.7 mm ≤ L2 ≤ L1. The length L2 of the second colloid 52 is set to be within such a range that the sealing performance of the second colloid 52 between the battery case and the body 1 can be satisfied. In case that L2 is less than 0.7 mm, the second colloid 52 is not filled sufficiently. That is, a gap may be formed between the fifth sub-surface 32 of the second ring body 12 coated with the second colloid 52 and the battery case. In case that L2 is greater than L1, the overflow of the second colloid 52 may be occurred.

L2 also satisfies: L2 ≤ 1.8 mm. In case that L2 is set to be less than or equal to 1.8 mm and is set to be greater than or equal to 1 mm, the risk of the overflow of the second colloid 52 is avoided while ensuring that the second colloid 52 is sufficiently filled. It will be appreciated that L1 is greater than or equal to 1.8 mm in order to avoid the risk of overflow of the second colloid 52 on the fifth sub-surface 32.

Note that the length L2 of the second colloid 52 is varied according to the size of the sealing member 100, so that the second colloid 52 is sufficiently filled without overflowing from the fifth sub-surface 32. In an embodiment of the present application, the sealing member 100 is applied to a 21700-model cylindrical battery, and L1 is equal to 1.8 mm. L2 is set to be less than or equal to 1.8 mm, so that the overflow of the second colloid 52 from the fifth sub-surface 32 is avoided. Further, L2 is greater than or equal to 1 mm, so as to ensure that the second colloid 52 is sufficiently filled between the battery case and the body 1. In another embodiment of the present application, the sealing member 100 is applied to a 18650-model cylindrical battery, and L1 is equal to 1 mm. That is, L2 is set to be less than or equal to 1 mm, so that the overflow of the second colloid 52 from the fifth sub-surface 32 is avoided. Further, L2 is greater than or equal to 0.7 mm to ensure that the second colloid 52 is sufficiently filled between the battery case and the body 1.

Further, referring to FIG. 3 and FIG. 4, FIG. 3 and FIG. 4 both are an enlarged schematic view of part B in FIG. 1. For ease of understanding, the second colloid 52 is not applied on the fifth sub-surface 32 in FIG. 4, and the second colloid 52 is applied on the fifth surface 8 in FIG. 3.

Referring to FIG. 1, FIG. 3 and FIG. 4, the second surface 3 further includes a sixth sub-surface 33 extending along the axial direction of the second ring body 12. The fourth sub-surface 31 and the fifth sub-surface 32 are connected by the sixth sub-surface 33. In the axial direction of the second ring body 12, the second colloid 52 does not protrude from the plane where the fourth sub-surface 31 is located. The sixth sub-surface 33 is provided so that a step is formed between the fifth sub-surface 32 and the fourth sub-surface 31. Therefore, when the second colloid 52 is applied to the fifth sub-surface 32, the second colloid does not overflow to the fourth sub-surface 31 due to the limitation of the sixth sub-surface 33. In addition, the second colloid 52 does not protrude from the plane where the fourth sub-surface 31 is located in the axial direction of the second ring body 12. It will be appreciated that, when in case that the body 1 is assembled, the battery case does not come into a direct contact with the second colloid 52. Instead, the battery case comes into contact with the second colloid 52 after a partial structure of the fourth sub-surface 31 is deformed, so that the risk of overflow of the second colloid 52 when the body 1 is assembled with the battery case can be avoided.

In an embodiment of the present application, the thickness of the second colloid 52 applied on the fifth sub-surface 32 in a direction perpendicular to the fifth sub-surface 32 is T2. T2 satisfies: 0.03 mm ≤ T2 ≤ 0.10 mm. The thickness T2 of the second colloid 52 is set such that the sealing performance of the second colloid 52 to the gap between the battery case and the body 1 can be satisfied. In case that T2 is less than 0.03 mm, the second colloid 52 is not filled sufficiently, and a gap may be formed between the fifth sub-surface 32, coated with the second colloid 52, of the second ring body 12 and the battery case. In case that T2 is greater than 0.10 mm, overflow or the like may occur.

Referring to FIG. 1, the thickness of the first ring body 11 in a radial direction of the first ring body is T3. T3 satisfies: 0.52 mm ≤ T3 ≤ 0.65 mm. The requirement of assembling the body 1 to the battery case can be satisfied. In case that T3 is less than 0.52 mm, the strength of the body 1 is insufficient. In case that T3 is larger than 0.65 mm, the body 1 is too large to be fitted smoothly into the battery case. In an embodiment of the present application, in case that the sealing member 100 is applied a 18650-model cylindrical battery, T3 satisfies: 0.52 mm ≤ T3 ≤ 0.58 mm, so that the requirement of assembling the body 1 to the battery case can be satisfied. In case that T3 is less than 0.52 mm, the strength of the body 1 is insufficient. In case that T3 is larger than 0.58 mm, the body 1 is too large to be fitted smoothly into the battery case. In another embodiment of the present application, in case that the sealing member 100 is applied to a 21700-model cylindrical battery, T3 satisfies: 0.55 mm ≤ T3 ≤ 0.65 mm, so that the requirement of assembling the body 1 to the battery case can be satisfied. In case that T3 is less than 0.55 mm, the strength of the body 1 is insufficient. In case that T3 is larger than 0.65 mm, the body 1 is too large to be fitted smoothly into the battery case.

Referring to FIG. 5, a battery cap is provided in this application. The battery cap includes a sealing member 100 as described above. The battery cap includes all the technical solutions of the above-described embodiments. Therefore, the battery cap has at least the beneficial effects of the technical solutions of the above-described embodiments. Details are not described herein.

## Claims

1. A sealing member, **characterized in that** the sealing member comprises:
a body (1) configured in a shape of a hollow ring, wherein the body (1) comprises a first ring body (11) and a second ring body (12) connected in an axial direction of the body (1), the first ring body (11) and the second ring body (12) are both configured in a shape of a hollow ring, an inner diameter of the first ring body (11) is larger than an inner diameter of the second ring body (12), the second ring body (12) comprises a first surface (2) and a second surface (3), the first surface (2) and the second surface (3) are arranged opposite to each other in an axial direction of the second ring body (12); and
a colloid structure (5) comprising a first colloid (51) and a second colloid (52), wherein the first colloid (51) is applied on a surface of the body (1), and a second colloid (52) is applied at positions where the first colloid (51) is located on any one or a combination of two of the first surface (2) and the second surface (3).

2. The sealing member according to claim 1, wherein a first chamber (11A) is formed in the first ring body (11), the first ring body (11) comprises a third surface (1A), the third surface (1A) is configured as an inner wall of the first chamber (11A);
wherein the first surface (2) comprises a first sub-surface (21) configured in a shape of a ring, the first sub-surface (21) is connected to the third surface (1A), the second colloid (52) is applied on the first sub-surface (21).

3. The sealing member according to claim 2, wherein the second colloid (52) applied on the first sub-surface (21) is configured in a shape of a ring, an inner diameter of the second colloid (52) applied on the first sub-surface (21) is D1, and an inner diameter of the first sub-surface (21) is D2;
where D1 and D2 satisfy: D1 ≥ D2, or optionally, D2 satisfies: D2 ≥ 14.4 mm.

4. The sealing member according to claim 3, wherein an outer diameter of the second colloid (52) applied on the first sub-surface (21) is D3 and an outer diameter of the first sub-surface (21) is D4; and
where D3 and D4 satisfy: D3 ≤ D4, or optionally, D4 satisfies: D4 ≤ 19.15 mm.

5. The sealing member according to claim 2, a protrusion (6) configured in a shape of a ring is arranged on the first sub-surface (21), a height of the protrusion (6) in the axial direction of the second ring body (12) is greater than a thickness of the second colloid (52) in the axial direction of the second ring body (12).

6. The sealing member according to claim 5, wherein the second colloid (52) is located between the protrusion (6) and the third surface (1A) in a radial direction of the second ring body (12).

7. The sealing member according to claim 5, wherein a height of the protrusion (6) in the axial direction of the second ring body (12) is H; wherein H satisfies: 0.10 mm ≤ H ≤ 0.16 mm.

8. The sealing member according to claim 7, wherein a thickness of the second colloid (52) applied on the first sub-surface (21) in the axial direction of the second ring body (12) is T1; wherein T1 satisfies: 0 < T1 < 0.10 mm.

9. The sealing member according to claim 2, wherein a weight of the second colloid (52) applied on the first sub-surface (21) is M; wherein M satisfies: 5mg ≤ M ≤ 9 mg.

10. The sealing member according to claim 2, wherein the first surface (2) further comprises a second sub-surface (22) and a third sub-surface (23);
the second sub-surface (22) is configured in a shape of a ring and an outer diameter of the second sub-surface (22) is less than an inner diameter of the first sub-surface (21), the second sub-surface (22) is located on a side, away from the first ring body (11) in the axial direction of the second ring body (12), of the first sub-surface (21); and
the first sub-surface (21) is connected to the second sub-surface (22) by the third sub-surface (23).

11. The sealing member according to any one of claims 1 to 10, wherein a second chamber (12A) is formed in the second ring body (12), the second ring body (12) further comprises a fourth surface (7) and a fifth surface (8), the fourth surface (7) is configured as an inner wall of the second chamber (12A), the fifth surface (8) is arranged opposite to the fourth surface (7) in a radial direction of the second ring body (12);
the second surface (3) comprises a fourth sub-surface (31) configured in a shape of a ring and a fifth sub-surface (32) connecting the fourth sub-surface (31) to the fifth surface (8);
wherein the fourth sub-surface (31) is connected to the fourth surface (7), the fifth sub-surface (32) is obliquely arranged in the axial direction of the second ring body (12), and the second colloid (52) is applied on the fifth sub-surface (32).

12. The sealing member according to claim 11, wherein a distance from a connection between the fifth sub-surface (32) and the fourth sub-surface (31) to a connection between the fifth sub-surface (32) and the fifth surface (8) is L1, and a length of the second colloid (52) applied on the fifth sub-surface (32) in a direction from the connection between the fifth sub-surface (32) and the fourth sub-surface (31) to the connection between the fifth sub-surface (32) and the fifth surface (8) is L2;
wherein L1 and L2 satisfy: 0.7 mm ≤ L2 ≤ L1, or optionally, L2 satisfies: L2 ≤ 1.8 mm.

13. The sealing member according to claim 11, wherein the second surface (3) further comprises a sixth sub-surface (33) extending axially along the second ring body (12), the fourth sub-surface (31) is connected to the fifth sub-surface (32) by the sixth sub-surface (33);
in the axial direction of the second ring body (12), the second colloid (52) does not protrude from a plane where the fourth sub-surface (31) is located.

14. The sealing member according to claim 13, wherein a thickness of the second colloid (52) applied on the fifth sub-surface (32) in a direction perpendicular to the fifth sub-surface (32) is T2; wherein T2 satisfies: 0.03 mm ≤ T2 ≤ 0.10 mm.

15. The sealing member according to any one of claims 1 to 14, wherein a thickness of the first ring body (11) in a radial direction of the first ring body (11) is T3; wherein T3 satisfies: 0.52 mm ≤ T3 ≤ 0.65 mm.

16. The sealing member according to any one of claims 1 to 14, wherein the second colloid (52) is applied at positions where the first colloid (51) is applied on the first surface (2) and the second surface (3);
wherein the second colloid (52) located on the first surface (2) and the second colloid (52) located on the second surface (3) are made of a same or different materials.

17. The sealing member according to any one of claims 1 to 16, wherein the first colloid (51) is asphaltic glue; and/or,
the second colloid (52) is a colloid of n-alkanes.

18. A battery cap, **characterized in that** the battery cap comprises a sealing member according to any one of claims 1 to 17.
